# EUROPEAN PATENT SPECIFICATION

(11) **EP 0 644 242 B1**
(45) Date of publication and mention of the grant of the patent: **10.02.1999**
(21) Application number: 94202618.8
(22) Date of filing: 12.09.1994
(51) Int. Cl.: C09C 1/00, C09C 3/06, C08K 9/02, C08L 23/00

(54) **Polyolefin composition containing coated mica particles to prevent yellowing and methods therefore**
Polyolefinzusammensetzung, beschichtete Glimmerteilchen enthaltend, um Vergilbung zu verhindern, sowie Methoden dafür
Composition de polyoléfine contenant de la mica revêtue pour prévenir le jaunissement ainsi que méthodes correspondantes

(30) Priority: 21.09.1993 US 125108
(43) Date of publication of application: 22.03.1995
(73) Proprietor: ENGELHARD CORPORATION, Iselin, New Jersey 08830-0770 (US)
(72) Inventor: Sipsas, Ionnis, Forest Hills, New York (US); Mullaney, Brian, Bloomingburg, New York (US); Kelderhouse, Leigh Ann, Yorktown Heights, New York (US)
(74) Representative: Incollingo, Italo

(56) References cited:
- EP-A- 0 560 144
- WO-A-94/01498

## Description

### BACKGROUND OF THE INVENTION

### Field of the Invention

The present invention relates to anti-oxidant containing polyolefin compositions including titanium dioxide-coated mica particles with a coating of silica and alumina calcined thereon to prevent yellowing of the polyolefin compositions.

### Description of the Prior Art

Many pearlescent or nacreous pigments are based on micaceous substrates which have been coated with a metal oxide layer. As a result of reflection and refraction of light, these pigments exhibit pearl-like luster and depending on the thickness of the metal oxide layer, they can also exhibit interference color effects.

Among the pearlescent pigments encountered most often on a commercial basis are titanium dioxide-coated mica pearlescent pigments. However, often such pigments are incompatible with the polyolefin compositions in which they are incorporated. For instance, inorganic pigments, such as titanium dioxide-coated mica pigments, frequently cause yellowing of anti-oxidant containing polyolefin compositions in which they are contained.

U.S. Patent No. 4,209,430 relates to a process for suppressing yellowing in thermoplastic polyolefins containing a phenolic anti-oxidant and TiO₂ pigment by adding a phosphorylated polyene either directly to the polyolefin or as a coating on the pigment.

U.S. Patent No. 4,357,170 reviews various solutions to the problem of yellowing of titanium dioxide pigments in polymeric compositions such as polyethylene in the presence of additives such as phenolic antioxidants.

U.S. Patent No. 4,494,993 relates to a pigment in which a homogeneous mixture of titanium dioxide, silicon dioxide and aluminum oxide is coated on mica flakes.

W0-A-9401498 points out that the discoloration problem is overcome only if the titanium dioxide coated mica is overcoated with silicon oxide, the coated grains are further coated with aluminum oxide and then the surfaces of the resultant coated particles are still further coated with zinc oxide or hydrate. EP-A-0560144 describes a pigment per sé.

It has been found that the prior art solutions to the yellowing of anti-oxidant containing polyolefin compositions are not totally effective. Some yellowing of the polyolefin compositions can still be seen. Therefore, it is desirable to develop a titanium dioxide-coated mica containing polyolefin composition which avoids the disadvantages of the prior art described above, affording the advantages of substantially improving control of the yellowing phenomena frequently encountered.

It is accordingly an object of this invention to provide anti-oxidant containing polyolefin compositions including titanium dioxide-coated mica particles having a coating of silica and alumina calcined thereon to prevent yellowing of the polyolefin composition. Another object of the present invention is to provide a method of preventing the yellowing of an anti-oxidant containing polyolefin composition.

These and other objects of the invention will become apparent to those skilled in this art from the following detailed description.

### SUMMARY OF THE INVENTION

This invention relates to anti-oxidant and titanium dioxide-coated mica containing polyolefin compositions and more particularly to such polyolefin compositions in which the titanium dioxide-coated micaceous pearlescent pigment include a coating of silica and alumina calcined thereon.

The invention also provides a process for preventing the yellowing of a polyolefin composition, which comprises mixing titanium dioxide coated-mica particles having a coating of silica and alumina calcined thereon with an antioxidant and a polyolefin.

### DETAILED DESCRIPTION OF THE INVENTION

Titanium dioxide-coated mica pearlescent pigments are well known in the art. They are generally formed by depositing a hydrous titanium compound on a mica substrate and calcining to produce the titanium dioxide-coated mica pigment. Any of the titanium dioxide-coated mica pigments known heretofore can be used in the practice of the present invention.

Preferably, a mica substrate is coated with hydrous titanium dioxide. The titanium dioxide-coated substrate may then be calcined.

The titanium dioxide-coated mica pigments include anatase and rutile forms of titanium dioxide. Both forms can be treated with a coating of silica and alumina according to the present invention to prevent the yellowing of the polyolefin compositions in which they are contained. Various particle sizes of the titanium dioxide-coated mica pigments my be coated with the silica and alumina coating. For example, pigments with an average particle size from 10µ to 50µ may be coated with the silica and alumina coating. Particle sizes outside this range can also be treated.

The titanium dioxide-coated mica pigments which can be treated with a coating of silica and alumina include the white pearl titanium dioxide-coated micas. Also, interference pigments can be used. Interference pigments are pigments in which the thickness of the titanium dioxide layer on the mica causes the film to act as an optical filter, and interference colors are observed. Pigments such as interference yellow, red, blue and green may be used or any intermediate colors.

The titanium dioxide-coated mica pigments also may contain ingredients added thereto to improve the durability characteristics or other properties of the pigments. Thus, the titanium dioxide-coated mica pigments may contain various oxides such as tin oxide, chromium oxides and the like.

A wide variety of polyolefins are well known in the art and are suitable for being pigmented by the coated titanium dioxide-coated mica pigments of this invention. Illustrative of such polyolefins are the following: polyethylene, polypropylene, polybutadiene, and the like. The foregoing list is merely for illustration and not by way of limitation.

Conventional anti-oxidants typically used in polyolefin compositions include, for example, alkylated phenols, substituted benzophenones, thiobisphenols, polyphenols, and the like and mixtures thereof. Exemplary antioxidants include 2,6-di-tertiary-butylpara-cresol, 2,2'-methylenebis (4-methyl-6-tertiary-butylphenol), 4,4' -methylenebis (2, 6-di-tertiary-butylphenol), 4,4' -thiobis (6-tertiary-butylorthocresol), and the like.

A wide variety of conventional additives may also be included in the polyolefin compositions as is necessary, desirable or conventional. Such additives include catalysts, initiators, blowing agents, UV stabilizers, organic pigments including tinctorial pigments, plasticizers, leveling agents, flame retardants, anti-cratering additives, and the like.

In practicing the invention, the titanium dioxide-coated mica pigment may be treated with a coating of silica and alumina according to the method disclosed herein. Thus, the titanium dioxide-coated mica pigment may be coated or surface treated by contacting a solution of a coating composition with the inorganic pigments followed by drying the pigments.

After the titanium dioxide-coated mica particles are provided with the coating, it is calcined thereon. The calcining of the titanium dioxide coating compound on the mica substrate and the calcining of the coating on the titanium dioxide-coated mica may be done separately in two calcining steps, or simultaneously in a single calcining step after applying a coating composition directly onto the coating of the titanium compound. For example, the coating composition for the silica and alumina coating may be added directly to the coating of the titanium compound on the mica substrate and then calcined, thereby requiring only one calcining step.

In the case of the anatase modification of the titanium dioxide coating, the two calcining steps are preferred. For the rutile modification, both the single calcining step and the two calcining steps may be used.

Of importance in this treatment, though, is that the final treated inorganic pigment retain the coating of silica and alumina calcined on a surface thereof. Conventional finishing operations then may be practiced on the treated inorganic pigment.

The coating of the titanium dioxide-coated mica pigment with silica and alumina may be done with the simultaneous coating of a Si compound and an Al compound. However, it is also possible to first coat an Al compound followed by a Si compound, or a Si compound first followed by an Al compound.

The amount of the coating composition is preferably sufficient to provide silica and alumina on the titanium dioxide-coated mica in a quantity of about 0.5% to about 2.0% Al by weight, more preferably about 0.8% to about 1.5% Al by weight, and about 1.5% to about 4.0% Si by weight, more preferably about 1.5% to about 3.0% Si by weight.

If too great a concentration of silica or alumina are used in the coating on the titanium dioxide-coated mica, the luster of the pigment falls to unacceptable levels. In that event, the concentrations should be reduced.

The range for the calcining temperature of the coating composition for the silica and alumina coating is preferably about 800°C to about 950°C. More preferably, the range is about 825°C to about 875°C. The calcining time for the silica and alumina coating can range from several minutes to several hours. Typically, 100 g of titanium dioxide-coated mica pigment are calcined at about 850°C for 45 minutes. If a smaller quantity is used, less calcining time is needed. In general, it is only necessary to insure that the pigment reaches the calcining temperature for a short period of time.

Sodium silicate, Na₂SiO₃.5H₂O, may preferably be used for deposition of the silica. Other forms of soluble silicates can also be used, such as quaternary ammonium silicate solutions. Aluminum chloride is preferably used for the precipitation of the alumina. Other compounds of alumina may also be used such as aluminum nitrate, aluminum acetate or aluminum sulfate. The pH during addition of the coating composition for the silica and alumina coating is usually about 7.0 to about 9.0. The preferable pH is about 7.5 to about 8.5.

The titanium dioxide-coated mica particles having a layer of silica and alumina calcined thereon may then be added to an antioxidant containing polyolefin composition. The titanium dioxide-coated micaceous products of the present invention can be used in any application of polyolefin compositions where the titanium dioxide-coated mica pigments have been used heretofore.

A significant pigmentary property improvement which can be garnered by the treated titanium dioxide pigments of this invention is suppression of yellowing in polyolefin compositions, such as, for example, polyethylene, polypropylene and the like.

By way of illustration but without limitation of the scope of the invention, following are examples of the antioxidant containing polyolefin compositions having titanium dioxide-coated mica particles according to the present invention.

### Example 1

100 g. of fully calcined, pearl reflecting TiO₂-coated mica with particles having an average particle size of 10 microns, available from The Mearl Corporation as Mearlin Satin White, 9130F, were dispersed in 500 ml of distilled water and placed in a suitable vessel. The temperature was raised to 85°C and maintained at this temperature. Stirring was maintained throughout the coating process. A solution was then added containing 9.6 g. of AlCl₃.6H₂O in 150 ml of distilled water at a rate of 1.5 ml/min. The pH was maintained at 8.0 using a solution consisting of 17.0 g. of Na₂SiO₃.5H₂O in 150 ml of distilled water. After the addition, the pH was reduced to 3.5 using 1:1 conc. HCl: distilled water. The slurry was stirred for one hour. It was then filtered on a Buchner funnel, washed adequately with distilled water to remove salts and dried overnight at 120°C. It was then calcined at 850°C for 45 minutes. This procedure produced a coating of approximately 2% Si by weight and 1% Al by weight on the TiO₂-coated mica.

### Example 2

The procedure of Example 1 was repeated using a pearl reflecting TiO₂-coated mica having an average particle size of 25 microns and available from The Mearl Corporation as Mearlin Super White, 9020C.

### Example 3

The procedure of Example 1 was repeated using a pearl reflecting TiO₂-coated mica having an average particle size of 10 microns and available from The Mearl Corporation as MagnaPearl 2000.

### Example 4

In this example, a single calcining step was used after the addition of the alumina and silica coating.

Example 1 was repeated, except that fully calcined pearl reflecting TiO₂-coated mica platelets were not used. Instead, Mearlin Satin White 9130F platelets were used directly from a coating bath after the hydrous titanium dioxide had been added. The amount of platelets taken was sufficient to yield 100 g. of fully calcined product. The temperature of the platelets in the mother liquor was adjusted to 85°C and the procedure of Example 1 followed.

The Yellow Index for a control sample of untreated platelets taken from the coating bath was 38.1. A sample treated with alumina and silica and calcined at a temperature of 900°C had a Yellow Index of 10.0.

Testing was performed by incorporating the silica and alumina coated titanium dioxide-coated mica in high density polyethylene (HDPE) step chips with an antioxidant, butylated hydroxytoluene (BHT), and exposing the step chips in a QUV meter. The yellowing which occurred was monitored by obtaining the Yellow Index as measured on a Hunter LabScan meter.

The pigment under test was first blended at 1% concentration based on the weight of the resin with pellets of high density polyethylene (HDPE) in a P-K (Paterson-Kelley) blender. 0.3% butylated hydroxytoluene was added and blended. A charge of 200 g was used. The resin containing the treated titanium dioxide-coated mica and the BHT was then injection molded into step chips. These step chips were then exposed in a QUV meter for a total of 96 hours. The Yellow Index was then measured on a Hunter LabScan instrument. The higher the Yellow Index (YI), the greater the degree of yellowing. If BHT is not used, no yellowing occurs. Table 1 lists the values obtained in using this standard testing procedure on Examples 1, 2 and 3.

**TABLE 1**

| | Average Particle Size (µ) | YI | Visual Obs. |
|---|---|---|---|
| Ex.1 Pearl TiO₂ Coated Mica - Untreated | 10 | 37.4 | Yellow |
| Ex.1 Pearl TiO₂ Coated Mica - Treated | 10 | 8.9 | No Yellowing |
| | | | |
| Ex.2 Pearl TiO₂ Coated Mica - Untreated | 25 | 43.4 | Yellow |
| Ex.2 Pearl TiO₂ Coated Mica - Treated | 25 | 6.2 | No Yellowing |
| | | | |
| Ex.3 Pearl TiO₂ Coated Mica - Untreated | 10 | 29.9 | Yellow |
| Ex.3 Pearl TiO₂ Coated Mica - Treated | 10 | 1.5 | No Yellowing |

Although the present invention has been described in relation to particular embodiments thereof, variations and modifications will become apparent to those skilled in the art.

## Claims

1. A composition comprising:
a polyolefin;
an antioxidant; and
mica particles having on a surface thereof a first layer of a coating consisting of titanium dioxide and a second layer of a calcined coating consisting of silica and alumina thereon.

2. A composition according to claim 1, wherein the antioxidant is butylated hydroxytoluene.

3. A composition according to claim 1, wherein the polyolefin is polyethylene.

4. A composition according to claim 1, wherein the coating of silica and alumina comprises of about 1.5% to 4.0% of silicon and of about 0.5% to 2.0% of aluminum, based on the weight of the coated mica.

5. A composition according to claim 1, wherein the coating of silica and alumina comprises of about 1.5% to 3.0% of silicon and of about 0.8% to 1.5% of aluminum, based on the weight of the coated mica.

6. A composition according to claim 1, wherein the coating of silica and alumina is calcined at a temperature of about 800 to 950°C.

7. A composition according to claim 1, wherein the coating of silica and alumina is calcined at a temperature of about 825 to 875°C.

8. A composition according to claim 1, wherein the coating of titanium dioxide is the rutile form.

9. A composition according to claim 1, wherein the coating-of titanium dioxide is the anatase form.

10. An antioxidant containing composition having, in addition to the antioxidant, titanium dioxide-coated mica particles, the titanium dioxide-coated mica particles having a layer consisting of silica and alumina calcined thereon.

11. A process for preventing the yellowing of an antioxidant containing polyolefin composition, which comprises mixing the polyolefin with mica particles having on a surface thereof a first layer of a coating consisting of titanium dioxide and a second layer of a coating consisting of silica and alumina, the second layer being calcined thereon, and an antioxidant.

12. The process according to claim 11, further comprising the step of preparing the polyolefin composition by adding an antioxidant to the polyolefin.

13. The process according to claim 11, wherein the antioxidant is butylated hydroxytoluene.

14. The process according to claim 11, further comprising the step of providing the second layer of silica and alumina on the first layer of titanium dioxide.

15. The process according to claim 11, further comprising the step of calcining the second layer of silica and alumina.

16. The process according to claim 11, further comprising the step of providing a layer of titanium dioxide on the mica particles.

17. The process according to claim 11, further comprising the step of preparing a polyolefin composition wherein the polyolefin is polyethylene.

18. The process according to claim 11, further comprising the step of providing a layer of a coating of silica and alumina.

19. The process according to claim 18, wherein the step of providing a layer of silica and alumina comprises adding the silica before the alumina.

20. The process according to claim 18, wherein the step of providing a layer of silica and alumina comprises adding the silica after the alumina.

21. The process process according to claim 11, wherein the first layer of a coating of titanium dioxide is calcined before calcining the second layer of silica and alumina.

22. The process according to claim 11, wherein the first layer of coating of titanium dioxide is calcined with the second layer of silica and alumina.

## Patentansprüche

1. Eine Zusammensetzung umfassend:
ein Polyolefin;
ein Antioxidans; und
Glimmerteilchen, die auf einer ihrer Oberflächen eine erste Lage einer aus Titandioxid bestehenden Beschichtung und eine zweite Lage einer aus Siliziumdioxid und Tonerde bestehenden darauf calcinierten Beschichtung aufweisen.

2. Die Zusammensetzung nach Anspruch 1, wobei das Antioxidans butyliertes Hydroxytoluol ist.

3. Die Zusammensetzung nach Anspruch 1, wobei das Polyolefin Polyethylen ist.

4. Die Zusammensetzung nach Anspruch 1, wobei die Beschichtung aus Siliziumdioxid und Tonerde etwa 1,5 bis 4,0 Prozent Silizium und etwa 0,5 bis 2,0 Prozent Aluminium umfaßt, bezogen auf das Gewicht des beschichteten Glimmer.

5. Die Zusammensetzung nach Anspruch 1, wobei die Beschichtung aus Siliziumdioxid und Tonerde etwa 1,5 bis 3,0 Prozent Silizium und etwa 0,8 bis 1,5 Prozent Aluminium umfasst, bezogen auf das Gewicht des beschichteten Glimmer.

6. Die Zusammensetzung nach Anspruch 1, wobei die Beschichtung aus Siliziumdioxid und Tonerde bei einer Temperatur von etwa 800 bis 950° C calciniert wird.

7. Die Zusammensetzung nach Anspruch 1, wobei die Beschichtung aus Siliziumdioxid und Tonerde bei einer Temperatur von etwa 825 bis 875° C calciniert wird.

8. Die Zusammensetzung nach Anspruch 1, wobei die Beschichtung aus Titandioxid in der Rutilform vorliegt.

9. Die Zusammensetzung nach Anspruch 1, wobei die Beschichtung aus Titandioxid in der Anatasform vorliegt.

10. Eine ein Antioxidans enthaltende Zusammensetzung, die zusätzlich zu dem Antioxidans Titandioxid-beschichtete Glimmerteilchen aufweist, wobei die Titandioxid-beschichteten Glimmerteilchen eine Lage aufweisen, die aus darauf calciniertem Siliziumdioxid und Tonerde besteht.

11. Ein Verfahren zur Verhinderung der Vergilbung einer ein Antioxidans enthaltenden Polyolefinzusammensetzung, umfassend das Mischen des Polyolefins mit Glimmerteilchen, die auf einer Oberfläche eine erste Lage einer Beschichtung, die aus Titandioxid besteht, und eine zweite Lage einer Beschichtung, die aus Siliziumdioxid und Tonerde besteht, aufweisen, wobei die zweite Lage darauf calciniert ist und einem Antioxidans.

12. Das Verfahren nach Anspruch 11, weiterhin umfassend den Schritt der Herstellung der Polyolefinzusammensetzung durch die Zugabe eines Antioxidans zu dem Polyolefin.

13. Das Verfahren nach Anspruch 11, wobei das Antioxidans butyliertes Hydroxytoluol ist.

14. Das Verfahren nach Anspruch 11, weiterhin umfassend den Schritt des Bereitstellens der zweiten Lage aus Siliziumdioxid und Tonerde auf der ersten Lage aus Titandioxid.

15. Das Verfahren nach Anspruch 11, weiterhin umfassend den Schritt des Calcinierens der zweiten Lage aus Siliziumdioxid und Tonerde.

16. Das Verfahren nach Anspruch 11, weiterhin umfasend den Schritt des Bereitstellens einer Lage aus Titandioxid auf den Glimmerteilchen.

17. Den Verfahren nach Anspruch 11, weiterhin umfassend den Schritt des Herstellens der Polyolefinzusammensetzung, wobei das Polyolefin Polyethylen ist.

18. Das Verfahren nach Anspruch 11, weiterhin umfassend den Schritt des Bereitstellens einer Lage einer Beschichtung aus Siliziumdioxid und Tonerde.

19. Das Verfahren nach Anspruch 18, wobei der Schritt des Bereitstellens einer Lage aus Siliziumdioxid und Tonerde die Zugabe des Siliziumdioxids vor der der Tonerde umfaßt.

20. Das Verfahren nach Anspruch 18, wobei der Schritt des Bereitstellens einer Lage aus Siliziumdioxid und Tonerde die Zugabe des Siliziums nach der der Tonerde umfaßt.

21. Das Verfahren nach Anspruch 11, wobei die erste Lage einer Beschichtung aus Titandioxid calciniert wird, bevor die zweite Lage aus Siliziumdioxid und Tonerde calciniert wird.

22. Das Verfahren nach Anspruch 11, wobei die erste Lage einer Beschichtung aus Titandioxid zusammen mit der zweiten Lage aus Siliziumdioxid und Tonerde calciniert wird.

## Revendications

1. Composition comprenant :
une polyoléfine ;
un anti-oxydant ; et
des particules de mica ayant sur leur surface une première couche de revêtement constituée de dioxyde de titane et une seconde couche d'un revêtement calciné constitué de silice et d'alumine.

2. Composition selon la revendication 1, dans laquelle l'anti-oxydant est l'hydroxytoluène butylé.

3. Composition selon la revendication 1, dans laquelle la polyoléfine est le polyéthylène.

4. Composition selon la revendication 1, dans laquelle le revêtement de silice et d'alumine comprend d'environ 1,5% à 4,0% de silicium et d'environ 0,5% à 2,0% d'aluminium, sur la base du poids du mica revêtu.

5. Composition selon la revendication 1, dans laquelle le revêtement de silice et d'alumine comprend d'environ 1,5% à 3,0% de silicium et d'environ 0,8% à 1,5%. d'aluminium, sur la base du poids du mica revêtu.

6. Composition selon la revendication 1, dans laquelle le revêtement de silice et d'alumine est calciné à une température d'environ 800 à 950°C.

7. Composition selon la revendication 1, dans laquelle le revêtement de silice et d'alumine est calciné à une température d'environ 825 à 875°C.

8. Composition selon la revendication 1, dans laquelle le revêtement de dioxyde de titane est la forme rutile.

9. Composition selon la revendication 1, dans laquelle le revêtement de dioxyde de titane est la forme anatase.

10. Anti-oxydant contenant une composition ayant, outre l'anti-oxydant, des particules de mica revêtues de dioxyde de titane, les particules de mica revêtues de dioxyde de titane comportant, calcinée sur elles, une couche constituée de silice et d'alumine.

11. Procédé pour empêcher le jaunissement d'une composition de polyoléfine contenant un anti-oxydant, dans lequel on mélange la polyoléfine avec des particules de mica ayant sur leur surface une première couche d'un revêtement constitué de dioxyde de titane et d'une seconde couche d'un revêtement constitué de silice et d'alumine, la seconde couche étant calcinée sur la première, et un anti-oxydant.

12. Procédé selon la revendication 11, comprenant en outre l'étape de préparation de la composition de polyoléfine par addition d'un anti-oxydant à la polyoléfine.

13. Procédé selon la revendication 11, dans lequel l'anti-oxydant est l'hydroxytoluène butylé.

14. Procédé selon la revendication 11, comprenant en outre l'étape de fourniture de la seconde couche de silice et d'alumine sur la première couche de dioxyde de titane.

15. Procédé selon la revendication 11, comprenant en outre l'étape de calcination de la seconde couche de silice et d'alumine.

16. Procédé selon la revendication 11, comprenant en outre l'étape de fourniture d'une couche de dioxyde de titane sur les particules de mica.

17. Procédé selon la revendication 11, comprenant en outre l'étape de préparation d'une composition de polyoléfine dans laquelle la polyoléfine est le polyéthylène.

18. Procédé selon la revendication 11, comprenant en outre l'étape de fourniture d'une couche d'un revêtement de silice et d'alumine.

19. Procédé selon la revendication 18, dans lequel l'étape de fourniture d'une couche de silice et d'alumine comprend l'addition de la silice avant l'alumine.

20. Procédé selon la revendication 18, dans lequel l'étape de fourniture d'une couche de silice et d'alumine comprend l'addition de la silice après l'alumine.

21. Procédé selon la revendication 11, dans lequel la première couche d'un revêtement de dioxyde de titane est calcinée avant calcination de la seconde couche de silice et d'alumine.

22. Procédé selon la revendication 11, dans lequel la première couche d'un revêtement de dioxyde de titane est calcinée avec la seconde couche de silice et d'alumine.
